# EUROPÄISCHE PATENTSCHRIFT

(11) **EP 2 874 831 B1**
(45) Veröffentlichungstag und Bekanntmachung des Hinweises auf die Patenterteilung: **07.04.2021**
(21) Anmeldenummer: 13736493.1
(22) Anmeldetag: 11.07.2013
(51) Int. Cl.: B60G 3/20

(54) **RADAUFHÄNGUNG FÜR DIE HINTERACHSE EINES FAHRZEUGS**
WHEEL SUSPENSION FOR THE REAR AXLE OF A VEHICLE
SUSPENSION DE ROUE POUR LE PONT ARRIÈRE D'UN VÉHICULE

(30) Priorität: 18.07.2012 DE 102012014196
(43) Veröffentlichungstag der Anmeldung: 27.05.2015
(73) Patentinhaber: Audi AG, 85045 Ingolstadt (DE)
(72) Erfinder: GOLDBERG, Ruben, 85049 Ingolstadt (DE); LANGHOFF, Hans-Jürgen, 85101 Lenting (DE); ISLIKER, Marco, 85049 Ingolstadt (DE)
(74) Vertreter: Reichert, Thomas Klaus
(86) Internationale Anmeldenummer: PCT/EP2013/002047
(87) Internationale Veröffentlichungsnummer: WO 2014/012636

(56) Entgegenhaltungen:
- EP-A1- 2 423 009
- DE-A1- 4 340 557
- DE-A1- 4 408 571
- DE-A1-102007 063 545
- US-A- 3 362 498
- US-A- 3 603 422
- US-A- 5 292 149

## Beschreibung

Die vorliegende Erfindung betrifft eine Radaufhängung für die Hinterachse eines Fahrzeugs, die Hinterachse eines Fahrzeugs sowie ein Verfahren für die Positionierung der Radträgerverbindung einer Dämpfervorrichtung bei der Radaufhängung eines Fahrzeugs.

Radaufhängungen für Fahrzeuge sind grundsätzlich bekannt. So zeigt z.B. die DE 10 2010 030 292 A1 grundsätzlich eine derartige Hinterachse. Auch ist es bereits bekannt, dass Hinterachsen von Fahrzeugen bzw. die entsprechenden Radaufhängungen ausgebildet sind, um lenkbar zu sein. Eine solche lenkbare hintere Radaufhängung bzw. eine lenkbare Hinterachse bringt den Vorteil mit sich, dass ein erleichtertes Spurhalten bzw. engere Kurvenradien und engere Wendekreise auch bei großen Fahrzeugen möglich werden. Auch die Straßenlage wird durch eine lenkbare Hinterachse verbessert. Auch aus der EP 2 423 009 A1, die den Oberbegriff des Anspruchs 1 offenbart, ist eine Achse eines Fahrzeugs bekannt, bei welcher eine Kombination aus Dämpfer und Feder eingesetzt wird. Die US 5,292,149 beschreibt eine Anordnung für den aktiven Ausgleich des Anstellwinkels eines Rades eines Fahrzeugs mit Bezug auf eine Radaufhängung.

Nachteilhaft bei bekannten lenkbaren Hinterachsen bzw. lenkbaren Radaufhängungen für Hinterachsen ist es jedoch, dass sich diese negativ auf die Breitenmaßkette des Fahrzeugs auswirken. So bedeutet das Vorsehen einer Lenkbarkeit der Radaufhängung einer Hinterachse, dass die Spur des Fahrzeugs verbreitert bzw. der Durchladebereich zwischen den beiden außenliegenden Radaufhängungen verringert werden muss. Ein verringerter Durchladebereich reduziert die Beladungsmöglichkeiten des Kofferraums eines Fahrzeugs. Eine Spurverbreiterung verschlechtert die aerodynamische Situation des Fahrzeugs und ist auch teilweise aus optischen Gründen unerwünscht. Die Notwendigkeit des Eingriffs in die Breitenmaßkette rührt daher, dass durch die Lenkbarkeit der Radaufhängung sich das an der Radaufhängung befestigte Rad in einem Radraum bewegen lässt. Diese Bewegbarkeit ist ein Verschwenken um eine vertikal zum Fahrzeug ausgerichtete Achse, also um die Lenkachse. Der dadurch eingestellte Radraum verhindert es, dass in diesem Radraum Einbauten, die sonst für die technische Funktionalität der Radaufhängung notwendig sind, verbaut werden können. Daher ist es bei bekannten Radaufhängungen notwendig, die Spurverbreiterung in Kauf zu nehmen, um sämtliche technischen Funktionalitäten, insbesondere die Dämpfung und die Federung, weiterhin in gewünschter Weise beibehalten zu können.

Es ist Aufgabe der vorliegenden Erfindung, eine Radaufhängung für die Hinterachse eines Fahrzeugs, eine solche Hinterachse eines Fahrzeugs sowie ein entsprechendes Verfahren für die Positionierung der Radträgerverbindung einer Dämpfervorrichtung für die Hinterachse eines Fahrzeugs zur Verfügung zu stellen, welche die voranstehend beschriebenen Nachteile zumindest teilweise beheben. Insbesondere ist es Aufgabe der vorliegenden Erfindung, eine Radaufhängung für die Hinterachse eines Fahrzeugs, eine solche Hinterachse eines Fahrzeugs sowie ein Verfahren für die Positionierung der Radträgerverbindung einer Dämpfervorrichtung für die Hinterachse eines Fahrzeugs zur Verfügung zu stellen, welche in kostengünstiger und einfacher Weise eine lenkbare Hinterachse mit möglichst geringem Platzbedarf zur Verfügung stellen.

Voranstehende Aufgabe wird gelöst durch eine Radaufhängung für die Hinterachse eines Fahrzeugs mit den Merkmalen des Anspruchs 1, eine Hinterachse eines Fahrzeugs mit den Merkmalen des Anspruchs 9 sowie ein Verfahren für die Positionierung der Radträgerverbindung gemäß den Merkmalen des Anspruchs 10. Weitere Merkmale und Details der Erfindung ergeben sich aus den Unteransprüchen, der Beschreibung und den Zeichnungen. Dabei gelten Merkmale und Details, die im Zusammenhang mit der erfindungsgemäßen Radaufhängung beschrieben sind, selbstverständlich auch im Zusammenhang mit dem erfindungsgemäßen Verfahren sowie der erfindungsgemäßen Hinterachse und jeweils umgekehrt, so dass bezüglich der Offenbarung zu den einzelnen Erfindungsaspekten stets wechselseitig Bezug genommen wird bzw. werden kann.

Eine erfindungsgemäße Radaufhängung für die Hinterachse eines Fahrzeugs weist einen in einem Schwenkbereich lenkbaren Radträger für die Befestigung eines Rades auf. Weiter ist eine Mehrzahl von Lenkern für die Anlenkung des Radträgers an die Karosserie des Fahrzeugs vorgesehen. Darüber hinaus ist eine Dämpfervorrichtung für die Dämpfung einer Bewegung des Radträgers relativ zur Karosserie vorhanden. Dabei ist die Dämpfervorrichtung über eine Radträgerverbindung mit dem Radträger verbunden. Eine erfindungsgemäße Radaufhängung zeichnet sich dadurch aus, dass die Radträgerverbindung in einem Anbindungsbereich des durch den Schwenkbereich des Radträgers definierten Radraumes des Rades angeordnet ist. Dieser Anbindungsbereich weist von allen zur Karosserie gewandten Bereichen des Radraumes den größten direkten Abstand von der Karosserie auf.

Eine erfindungsgemäße Radaufhängung ist vorzugsweise als Fünflenker-Radaufhängung, also mit fünf verschiedenen Lenkern für die Anlenkung des Radträgers an die Karosserie des Fahrzeugs ausgebildet. Insbesondere sind dies zwei Querlenker, zwei Längslenker und ein Spurlenker bzw. ein Steuerlenker. Selbstverständlich ist es grundsätzlich möglich, dass die Radaufhängung eine angetriebene Achse, also einen angetriebenen Radträger aufweist.

Erfindungsgemäß ist es wesentlich, dass die Radträgerverbindung in dem definierten Anbindungsbereich angeordnet ist. Hierfür ist der Radraum des durch den Schwenkbereich des Radträgers definierten Rades zu betrachten. Ist ein Rad am Radträger befestigt, so kann durch das Lenken des Radträgers in dem Schwenkbereich eine verschwenkende Bewegung, also ein Verschwenken zum Lenken des Rades stattfinden. Vergleicht man sämtliche Bewegungen zwischen den beiden Extrempositionen, also dem vollen Linkseinschlag und dem vollen Rechtseinschlag des lenkbaren Radträgers und dem Durchfedern der Achse, und werden alle Positionen summiert, so entsteht ein sogenannter Radraum, welchen das Rad während sämtlicher Bewegungssituationen zwischen den Extremsituationen des Schwenkbereichs des lenkbaren Radträgers nicht verlässt. Mit anderen Worten sind sämtliche Abschnitte innerhalb dieses Radraumes Bereiche, welche von dem Rad eingenommen werden können, während sämtliche Bereiche außerhalb des Radraumes von dem Rad nicht eingenommen werden können.

In erfindungsgemäßer Weise werden nun diejenigen Bereiche, also die Oberflächenabschnitte, des Radraumes, welche zur Karosserie des Fahrzeugs zeigen, miteinander verglichen. Dabei wird beim Vergleich Wert gelegt auf den "direkten" Abstand von der Karosserie. Jeder Bereich des Fahrzeugs hat je nach Betrachtungsrichtung unterschiedliche Abstände zur Karosserie. Als direkter Abstand ist im Sinne der vorliegenden Erfindung der von allen diesen möglichen Abständen kürzeste Abstand zu verstehen. Somit ist für jeden Bereich des Radraumes, welcher zur Karosserie des Fahrzeugs gerichtet ist, ein solcher eindeutiger direkter Abstand bestimmbar. Dieser kann auch als kürzester möglicher Abstand zwischen diesem Bereich und der Karosserie des Fahrzeugs definiert sein. Erfindungsgemäß wird nun derjenige Bereich als Anbindungsbereich ausgewählt, welcher den größten direkten Abstand aufweist. Dieser größte direkte Abstand zur Karosserie des Fahrzeugs führt dazu, dass ein Anbindungsbereich dort definiert ist, wo der größte Freiraum zwischen dem Radraum und der Karosserie vorliegt. So wird in Richtung der Breitenmaßkette durch den maximierten Freiraum zwischen dem Radraum und der Karosserie derjenige Platz exakt definiert, welcher die größtmögliche Bauraumtiefe zur Verfügung stellt, um weitere Komponenten anzuordnen. Dies führt dazu, dass in diesem Bereich der größte Bauraum zur Verfügung steht, in welchem insbesondere die Dämpfervorrichtung angeordnet und mit der Radträgerverbindung an der Dämpfervorrichtung verbunden werden kann.

In erfindungsgemäßer Weise kann auf diese Art die Dämpfervorrichtung über die Radträgerverbindung mit dem Radträger an einer Stelle verbunden werden, welche durch den maximierten zur Verfügung stehenden Bauraum die Beibehaltung der Spurweite wie auch die Beibehaltung des Durchladeabstandes für das Fahrzeug beibehält. So kann ohne Veränderung der grundsätzlichen geometrischen Abmessungen des Fahrzeuges eine gelenkte Hinterachse zur Verfügung gestellt werden und gleichzeitig die bekannten Funktionalitäten hinsichtlich der Feder und vor allem der Dämpfervorrichtung beibehalten werden.

Die Radträgerverbindung kann dabei erfindungsgemäß sowohl direkt, als auch indirekt mit dem Radträger verbunden sein. So kann ein direkter Anschluss der Dämpfervorrichtung an dem Radträger über die Radträgerverbindung, z.B. in Form eines Verbindungsauges, erfolgen. Auch ist es möglich, dass die Dämpfervorrichtung an einem der Lenker mit der Radträgerverbindung und damit indirekt über diesen Lenker mit dem Radträger verbunden ist.

Ein lenkbarer Radträger ist im Sinne der vorliegenden Erfindung insbesondere ein Radträger, welcher in einem für die Hinterachse relevanten Schwenkbereich verschwenkbar ist. Ein solcher Schwenkbereich liegt z.B. im Bereich von ca. ± 5°.

Durch die erfindungsgemäße Anordnung der Dämpfervorrichtung bzw. insbesondere der Radträgerverbindung wird es möglich, dass die Dämpfervorrichtung optimal hinsichtlich der Ausnutzung des Bauraums zwischen Radraum und Karosserie angeordnet wird, so dass eine Kollision zwischen dem Rad und der Dämpfervorrichtung wirksam vermieden und gleichzeitig der maximierte Bauraum ausgenutzt wird.

Insbesondere richtet sich der direkte Abstand gemäß der vorliegenden Erfindung in Richtung einer Achse senkrecht oder im Wesentlichen senkrecht zur Fahrtrichtung des Fahrzeugs. Diese kann auch als Querachse des Fahrzeugs bezeichnet werden. Vorzugsweise ist der direkte Abstand in Richtung einer Antriebsachse bzw. einer Antriebsgelenkachse, sofern eine solche vorhanden ist, des Rades der Raufaufhängung, also des Radträgers ausgerichtet.

Erfindungsgemäß wird unterschieden zwischen einem Verschwenken im Schwenkbereich für den Radträger für das Lenken des Rades und einer Bewegung des Rades in einer Auf- und Abbewegung, welche gedämpft werden soll durch die Dämpfervorrichtung.

Erfindungsgemäß kann bei einem Radraum, welcher im Wesentlichen torusförmig bzw. als im Inneren geschlossener Torus ausgebildet ist, die Anbindung über die Radträgerverbindung im Bereich der geringsten Ausdehnung des Radraumes in dieser Querrichtung des Fahrzeugs erfolgen. Vorzugsweise wird durch den Radraum ein Sattelpunkt bzw. ein Sattelbereich ausgebildet, welcher erfindungsgemäß als Anbindungsbereich definiert ist.

Bei der erfindungsgemäßen Radaufhängung ist der durch den Schwenkbereich des Radträgers definierte Radraum des Rades symmetrisch oder im Wesentlichen symmetrisch zu einer Symmetrieebene ausgebildet. Dabei ist die Radträgerverbindung der Dämpfervorrichtung in oder im Wesentlichen in dieser Symmetrieebene angeordnet. Dies führt dazu, dass eine besonders vorteilhafte Anordnung hinsichtlich der Fahrdynamik besteht. Insbesondere befindet sich in dieser Symmetrieachse auch die Rotationsachse des Rades in einer, in vielen oder in sämtlichen Radpositionen hinsichtlich des Schwenkbereichs des Radträgers. Die symmetrische Ausbildung bringt weiter den Vorteil mit sich, dass eine zusätzliche Maximierung des Bauraums zwischen Radraum und Karosserie zur Verfügung gestellt wird. Damit liegt der Anbindungsbereich ebenfalls in oder im Bereich dieser Symmetrieebene. Unter dem Anbindungsbereich ist insbesondere eine kleine geometrische Erstreckung mit Bezug auf die Gesamterstreckung der Oberfläche des Radraumes zu verstehen. Insbesondere ist ein im Wesentlichen punktförmiger Bereich zu verstehen, welcher als Anbindungsbereich definiert wird. Da jedoch in realer Ausführungsform eine punktförmige Anbindung, also ohne jegliche flächige Erstreckung, unmöglich ist, ist unter dem Anbindungsbereich insbesondere die kleinstmögliche flächige und/oder voluminöse Erstreckung zu verstehen, welche für die kraftübertragende Verbindung zwischen der Radträgerverbindung und dem Radträger notwendig ist.

Bei der erfindungsgemäßen Radaufhängung ist separat von der Dämpfervorrichtung mit Bezug auf den Radträger auf der gegenüberliegenden Seite der Dämpfervorrichtung eine Federvorrichtung für die Federung der Bewegung des Radträgers relativ zur Karosserie angeordnet. Mit anderen Worten wird erfindungsgemäß eine Trennung der Federfunktionalität von der Dämpfungsfunktionalität erzielt. Üblicherweise sind Federn hinsichtlich der geometrischen Erstreckung in Durchmesserrichtung deutlich größer als der Durchmesser von Dämpfervorrichtungen. Durch die Trennung der Federvorrichtung von der Dämpfervorrichtung wird zusätzlich ein Gewinn in Richtung der Höhenmaßkette erzielt. So kann eine erfindungsgemäße Radaufhängung durch die Separierung zwischen Dämpfervorrichtung und Federvorrichtung in dem zusätzlich geschaffenen Bauraum in der Breitenmaßkette eine Reduktion der Erstreckung in der Höhenmaßkette ermöglichen, so dass in dieser Richtung ein Raumgewinn bzw. eine Reduktion des Platzbedarfs einer erfindungsgemäßen Radaufhängung die Folge ist.

Ebenfalls vorteilhaft ist es, wenn bei der erfindungsgemäßen Radaufhängung, wie sie im voranstehenden Absatz erläutert worden ist, einer der Lenker eine topfartige Aufnahme aufweist, in welcher die Federvorrichtung abgestützt ist. Damit wird eine zusätzliche Lagervorrichtung für die Federvorrichtung vermieden. Dies führt zu reduziertem Materialbedarf und vor allem zu reduziertem Gewicht einer erfindungsgemäßen Radaufhängung. Die topfartige Aufnahme dient dazu, die Lagerung der Federvorrichtung zur Verfügung zu stellen.

Ebenfalls vorteilhaft ist es, wenn bei der Radaufhängung gemäß einem der beiden voranstehenden Ansprüche die Dämpfervorrichtung in oder an demselben Lenker abgestützt ist, wie die Federvorrichtung. Dies führt ebenfalls zu einer Reduktion der Materialkosten und zu einer Reduktion des Gewichts der erfindungsgemäßen Radaufhängung. Darüber hinaus kann eine erleichterte Auslegung bzw. ein verbessertes Ansprechverhalten der Kombination aus Dämpfervorrichtung und Federvorrichtung erzielt werden. Auch ist im Vergleich zu bekannten Bauteilen von Radaufhängungen nur die Anpassung eines einzelnen Lenkers notwendig, um die gewünschten Lagerstellen für Dämpfervorrichtung und Federvorrichtung zur Verfügung stellen zu können. Bei dieser Ausführungsform handelt es sich hinsichtlich der Verbindung zwischen der Radträgerverbindung und dem Radträger um eine indirekte Verbindung, also über eine Verbindung über einen Teil des entsprechenden Lenkers.

Vorteilhaft ist es ebenfalls, wenn bei einer erfindungsgemäßen Radaufhängung wenigstens einer der Lenker einen gekrümmten Abschnitt aufweist, welcher durch die Krümmung den Bauraum für die Dämpfervorrichtung schafft und/oder vergrößert. Ein gekrümmter Lenker ist insbesondere in einer Richtung gekrümmt, so dass er seinen Radiusmittelpunkt der Krümmung in der Richtung des Lenkers aufweist, in welchem auch der Bereich, welcher als Anbindungsbereich definiert ist, liegt. Mit anderen Worten ist der gekrümmte Bereich des Lenkers von dem Anbindungsbereich weg gekrümmt. Damit vergrößert sich der Bauraum bzw. wird der Bauraum für die Dämpfervorrichtung geschaffen. Dies ermöglicht es, die Dämpfervorrichtung, insbesondere im Hinblick auf die Positionierung der Radträgerverbindung, noch weiter an den Radraum heran zu schieben, da weitere geometrische Ausprägungen der Dämpfervorrichtung, insbesondere des Dämpferkolbens und des Dämpferzylinders, nicht in Bauraumkonflikt mit einem der Lenker stehen.

Vorteilhaft ist es darüber hinaus, wenn bei einer erfindungsgemäßen Radaufhängung die Radträgerverbindung derart angeordnet ist, dass das Verhältnis zwischen dem Hub des Radträgers bei der Relativbewegung des Rades zur Karosserie und dem dabei entstehenden Hub der Dämpfervorrichtung größer als 0,5:1, vorzugsweise größer als 0,6:1, insbesondere größer als 0,7:1 und bevorzugt größer als 0,8:1 ist. Eine solche Ausbildung wird erst durch eine erfindungsgemäße Positionierung der Radträgerverbindung möglich. So kann auf diese Weise eine besonders radnahe Anbindung zwischen der Dämpfervorrichtung und dem Radträger erfolgen. Dies ist von großem Vorteil, da es das Ansprechverhalten der Dämpfung verbessert. Auch kann die Dämpfervorrichtung einfacher und kostengünstiger ausgelegt werden, da sie einen größeren Hub und damit eine verbesserte Dämpfung zur Verfügung stellen kann.

Ein weiterer Vorteil wird dann erzielt, wenn bei einer erfindungsgemäßen Radaufhängung eine Antriebswelle für den Antrieb des Radträgers vorgesehen ist. Dabei handelt es sich um eine angetriebene Radaufhängung bzw. bei der Verwendung für eine Hinterachse um eine angetriebene Hinterachse des Fahrzeugs. Selbstverständlich ist es grundsätzlich auch möglich, dass erfindungsgemäß Radaufhängungen bei nicht angetriebenen, also passiven Hinterachsen, eingesetzt werden. Der Antrieb erfolgt vorzugsweise über eine Antriebswelle in Form einer Gelenkwelle, welche mit dem Antrieb des Fahrzeugs verbunden ist.

Weiterhin ist es ebenfalls möglich, dass bei einer erfindungsgemäßen Radaufhängung die Dämpfervorrichtung eine Dämpfung entlang einer Dämpferachse ermöglicht, wobei die Dämpferachse von der Vertikalen des Fahrzeugs mit Bezug auf die Fahrtrichtung des Fahrzeugs nach hinten und/oder zur Karosserie hin geneigt ist. Man spricht hier auch von sogenannten Schrägfederungsgrößen, welche vorzugsweise in einem Bereich von ca. 6° bis ca. 8° ausgebildet sind. Mit anderen Worten führt dies dazu, dass sich die Dämpfervorrichtung und damit auch die Dämpferachse bezogen auf das Fahrzeug nach innen und nach hinten neigen. Damit wird der mittlere und obere Abschnitt der Dämpfervorrichtung bereits von dem Radraum weg geneigt, so dass das Könfliktpotenzial hinsichtlich des Bauraums hauptsächlich für den unteren Abschnitt und insbesondere für die Radträgerverbindung der Dämpfervorrichtung vorliegt. Der restliche Teil der Dämpfervorrichtung ist bereits vom Radraum weg geneigt, so dass bei der Positionierung im Wesentlichen vorzugsweise ausschließlich auf die Radträgerverbindung Wert gelegt wird. Durch die Anstellung durch die Schrägfederungsgrößen wird darüber hinaus eine verbesserte Dämpfung, insbesondere beim Überrollen kleiner Hindernisse erzeugt, da eine Blockade des Rades wirkungsvoll vermieden wird.

Ein weiterer Vorteil wird dann erzielt, wenn bei einer erfindungsgemäßen Radaufhängung der lenkbare Radträger ausgebildet ist für einen symmetrischen oder im Wesentlichen symmetrischen Schwenkbereich mit Bezug auf die Schwenkachse. Insbesondere ist dieser Schwenkbereich im Bereich von ca. ± 5° ausgebildet. Eine symmetrische Ausbildung des Schwenkbereichs ist insbesondere bei der Anwendung auf beiden Seiten der Hinterachse, also für beide Radaufhängungen, von Vorteil. So wird auf beiden Seiten der gleiche Schwenkbereich zur Verfügung gestellt, so dass auch bei vollem Ausschlag auf beiden Seiten die gleiche Anstellung der Radträger und damit die gleichen Anstellwinkel der Räder zur Verfügung stehen. Dies verbessert die Manövrierfähigkeit, ohne Schlupf zwischen den beiden Rädern der Hinterachse in den Extrempositionen des Schwenkbereichs zuzulassen. Da es sich um eine gelenkte Hinterachse handelt, unterstützt diese nur grundsätzlich die Lenkung und muss nicht den vollen Schwenkbereich zur Verfügung stellen, wie dies bei einer Vorderachse eines Fahrzeugs notwendig ist.

Ein weiterer Gegenstand der vorliegenden Erfindung ist eine Hinterachse eines Fahrzeugs, aufweisend eine linke und eine rechte Radaufhängung, wobei beide Radaufhängungen erfindungsgemäß ausgebildet sind. Dementsprechend ist eine erfindungsgemäße Hinterachse mit den gleichen Vorteilen belegt, wie sie ausführlich mit Bezug auf eine erfindungsgemäße Radaufhängung erläutert worden sind. Vorzugsweise sind die beiden Radaufhängungen auf beiden Seiten der Hinterachse des Fahrzeugs identisch oder im Wesentlichen identisch, also mit den gleichen oder im Wesentlichen gleichen Merkmalen ausgestattet.

Ebenfalls Gegenstand der vorliegenden Erfindung ist ein Verfahren für die Positionierung der Radträgerverbindung einer Dämpfervorrichtung für die Verbindung mit einem in einem Schwenkbereich lenkbaren Radträger einer Radaufhängung für die Befestigung eines Rades. Ein solches erfindungsgemäßes Verfahren weist die folgenden Schritte auf:
- Bestimmen des durch den Schwenkbereich des Radträgers definierten Radraumes des Rades,
- Bestimmen eines Anbindungsbereichs des Radraumes, welcher von allen zur Karosserie gewandten Bereichen des Radraumes den größten direkten Abstand von der Karosserie aufweist und
- Positionieren der Radträgerverbindung im Anbindungsbereich.

Voranstehendes Verfahren ist hinsichtlich seiner Schritte insbesondere auf eine erfindungsgemäße Radaufhängung ausgerichtet. Dabei handelt es sich vorzugsweise um ein Konstruktionsverfahren, welches unter anderem die Positionierung der Radträgerverbindung in der Radaufhängung durchführen muss. Die Bestimmung des Radraumes kann sowohl manuell, als auch semiautomatisch oder vollautomatisch erfolgen. Wird der Radträger fertig konstruiert, so kann durch den Schwenkbereich eines an dem Radträger befestigten Rades bei der simulierten Bewegung durch den Schwenkbereich des Rades, also dem Verschwenken des Rades an dem Radträger, der Radraum des Rades definiert werden. Dieser Radraum wird hinsichtlich seiner Bereiche, welche zur Karosserie gewandt sind, auf den bereits beschriebenen direkten Abstand überprüft. Der größte direkte Abstand ermöglicht den größten Bauraum zwischen dem Radraum und der Karosserie, so dass dort der Anbindungsbereich definiert wird. In diesem Anbindungsbereich wird anschließend während der Konstruktion die Radträgerverbindung positioniert. Ein erfindungsgemäßes Verfahren ist vorzugsweise bei der Konstruktion für eine Radaufhängung gemäß der vorliegenden Erfindung einzusetzen. Dementsprechend bringt ein erfindungsgemäßes Verfahren die gleichen Vorteile mit sich, wie sie ausführlich mit Bezug auf eine erfindungsgemäße Radaufhängung erläutert worden sind.

Die vorliegende Erfindung, ihre Weiterbildungen sowie ihre Vorteile werden näher erläutert anhand der beigefügten Zeichnungsfiguren. Es zeigen jeweils schematisch:
- Figur 1: eine erste Ausführungsform einer erfindungsgemäßen Radaufhängung in der Draufsicht,
- Figur 2: die erfindungsgemäße Radaufhängung der Figur 1 mit einem eingezeichneten Radraum und den Extrempositionen des Rades und
- Figur 3: die Ausführungsform der Figuren 1 und 2 in der Rückansicht.

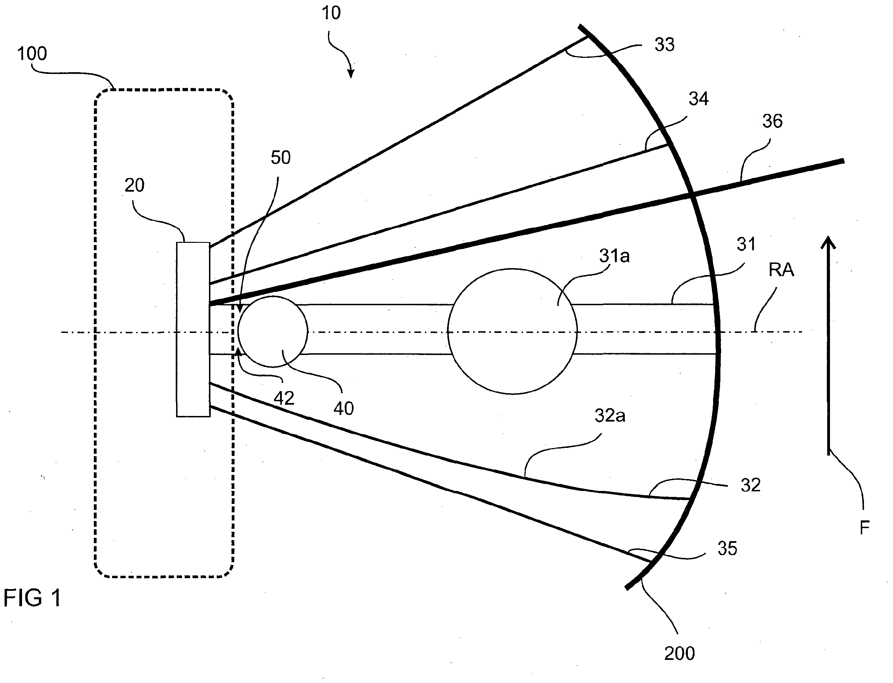

Elemente mit gleicher Funktion und Wirkungsweise sind in den Figuren 1 bis 3 jeweils mit denselben Bezugszeichen versehen.

Mit Bezug auf die Fig. 1 bis 3 wird eine Ausführungsform einer erfindungsgemäßen Radaufhängung 10 erläutert. Bei dieser Radaufhängung 10 handelt es sich um eine fünfgelenkige Radaufhängung, da fünf Lenker 31, 32, 33, 34 und 35 vorgesehen sind. Vorzugsweise sind zwei dieser Lenker 31, 32, 33, 34 und 35 als Querlenker, zwei der Lenker 31, 32, 33, 34 und 35 als Längslenker und einer dieser Lenker 31, 32, 33, 34 und 35 als Spurlenker bzw. Steuerlenker ausgebildet.

Zusätzlich zur Anbindung über die Lenker 31, 32, 33, 34 und 35 ist bei der Ausführungsform der Radaufhängung 10 gemäß der Fig. 1 bis 3 eine Antriebswelle 36 in Form einer Gelenkwelle vorgesehen. Diese ist schematisch dargestellt und treibt einen Radträger 20 an. Bei dieser Ausführungsform handelt es sich also um eine Hinterachse eines Fahrzeugs, welche angetriebene Radaufhängungen 10 und damit angetriebene Radträger 20 aufweist.

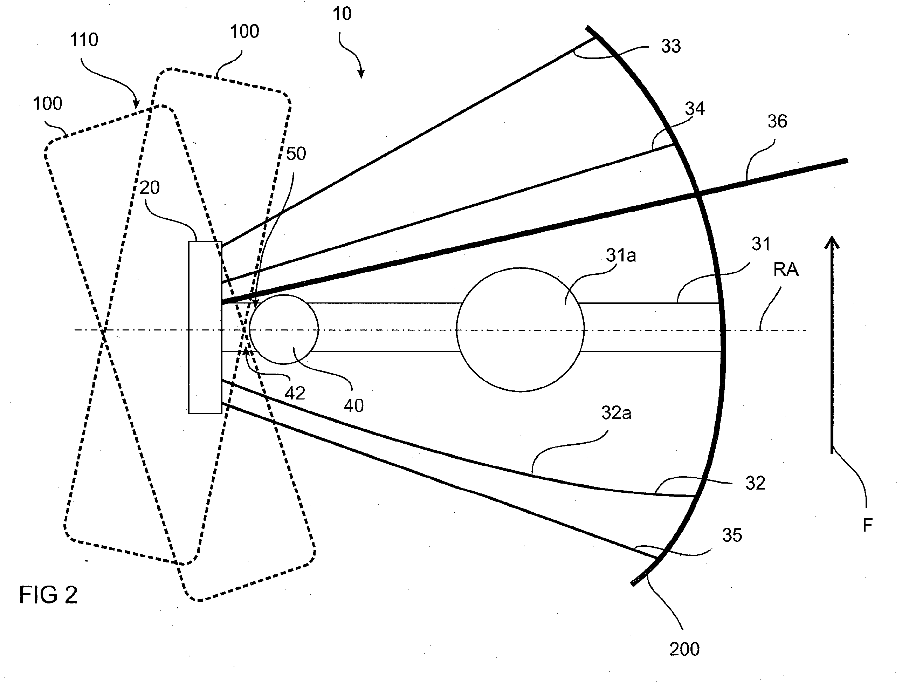

Erfindungsgemäß ist bei der Konstruktion der Radaufhängung 10 dieser Ausführungsform wie folgt vorgegangen worden. Nach Definition des Ortes des Radträgers 20 ist in der Simulation ein Rad 100 an dem Radträger 20 befestigt worden. Anschließend wurde das Rad 100 über sämtliche Extrembereiche und Zwischenabschnitte zwischen den Extrembereichen bewegt, wobei beide Extrempositionen des Rades 100 in Fig. 2 eingezeichnet sind. Beim Überstreichen aller Abschnitte zwischen diesen Extrempositionen bildet sich ein Radraum 110 heraus, welcher in Summe mit einem Torus mit geschlossenem Innenraum verglichen werden kann. Im Sattelraum dieses Radraumes 110 ist der Bereich anzutreffen, welcher von allen Bereichen des Radraumes 110, die in Richtung der Karosserie 200 gerichtet sind, den größten direkten Abstand aufweist. Unter dem direkten Abstand ist der jeweils kürzeste Abstand zwischen dem jeweiligen Bereich des Radraumes 110 und der Karosserie 200 zu verstehen. Bei dem längsten dieser direkten Abstände ist also der größte Bauraum in dieser Richtung vorhanden, in welchem anschließend die Radträgerverbindung 42 der Dämpfervorrichtung 40 positioniert wurde.

In den Fig. 1 und 2 ist gut zu erkennen, dass auf diese Weise eine Positionierung der Dämpfervorrichtung 40 erfolgen konnte, welche in optimaler Weise radnah in der Nähe des Radraumes 110 erfolgen konnte. Dies wurde möglich durch die erfindungsgemäße Positionierung im Anbindungsbereich 50. Die besonders radnahe und damit weit außenliegende Positionierung der Dämpfervorrichtung 40 verbessert nicht nur das Ansprechverhalten und die Dämpfungseigenschaften, sondern ermöglicht darüber hinaus die ideale Ausnutzung des Bauraums der Radaufhängung 10, so dass eine Beibehaltung der Spurbreite und gleichzeitig eine Beibehaltung der Durchladebreite des Fahrzeugs in Richtung der Breitenmaßkette, also in Querrichtung zur Fahrtrichtung F des Fahrzeugs, möglich wurde.

Bei der Ausführungsform der Radaufhängung 10, wie sie die Fig. 1 bis 3 zeigen, ist neben der Dämpfervorrichtung 40 eine separate Federvorrichtung 60 vorgesehen. Diese ist weiter innen in Richtung der Karosserie 200 in einer topfartigen Aufnahme 31a des Lenkers 31 vorgesehen. In demselben Lenker 31 stützt sich darüber hinaus auch die Dämpfervorrichtung 40 ab, so dass indirekt über diesen Lenker 31 die Radträgerverbindung 42 zwischen Dämpfer 40 und Radträger 20 zur Verfügung gestellt wurde.

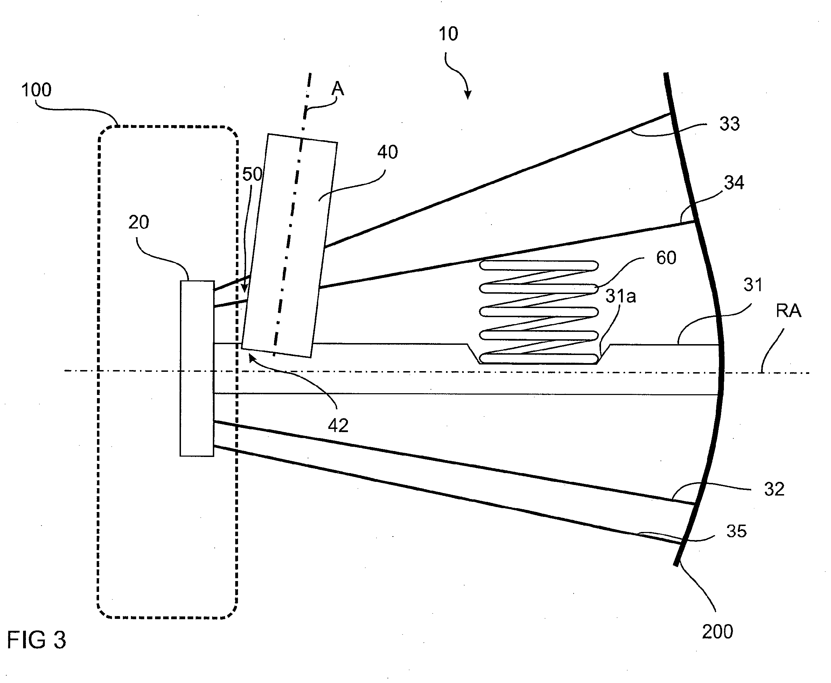

Wie ebenfalls aus der Fig. 3 zu erkennen ist, wurde durch die Separierung der Federvorrichtung 60 und der Dämpfervorrichtung 40 voneinander eine Reduktion der Bauhöhe der gesamten Radaufhängung 10 erreicht. Dies ermöglicht eine Reduktion des Bauraums, ohne negativen Einfluss auf die Breitenmaßkette der Radaufhängung 10 zu nehmen, da durch die erfindungsgemäße Positionierung der Dämpfervorrichtung 40 in radnaher Weise Freiraum für die separate Federvorrichtung 60 geschaffen wurde.

Erfindungsgemäß erfolgt auch eine Anstellung bzw. eine Schrägstellung der Dämpfervorrichtung 40, sowohl in Richtung der Karosserie 200, als auch bezogen auf die Radachse RA. Auch ein Anstellen nach hinten, also entgegen der Fahrtrichtung F kann erfindungsgemäß von Vorteil sein, wenn man die Dämpferachse A betrachtet.

In Fig. 2 und Fig. 1 ist darüber hinaus bei dem Lenker 32 ein gekrümmter Abschnitt 32a zu erkennen. Dieser krümmt sich nach außen, also vom Anbindungsbereich 50, von der Dämpfervorrichtung 40 und von der Federvorrichtung 60 weg, so dass er den Bauraum für diese einzelnen Komponenten schafft bzw. vergrößert.

Die voranstehende Erläuterung der Ausführungsform beschreibt die vorliegende Erfindung ausschließlich im Rahmen von Beispielen. Selbstverständlich können einzelne Merkmale der Ausführungsform, sofern technisch sinnvoll, frei miteinander kombiniert werden, ohne den Rahmen der vorliegenden Erfindung zu verlassen.

### Bezugszeichenliste

- 10: Radaufhängung
- 20: Radträger
- 31: Lenker
- 31a: topfartige Aufnahme
- 32: Lenker
- 32a: gekrümmter Abschnitt
- 33: Lenker
- 34: Lenker
- 35: Lenker
- 36: Antriebswelle
- 40: Dämpfervorrichtung
- 42: Radträgerverbindung
- 50: Anbindungsbereich
- 60: Federvorrichtung

- 100: Rad
- 110: Radraum
- 200: Karosserie

- A: Dämpferachse
- F: Fahrtrichtung des Fahrtzeugs
- RA: Radachse

## Patentansprüche

1. Radaufhängung (10) für die Hinterachse eines Fahrzeugs, aufweisend einen in einem Schwenkbereich lenkbaren Radträger (20) für die Befestigung eines Rades (100), der Schwenkbereich sich erstreckend von einem vollen Linkseinschlag des lenkbaren Radträgers (20) zu einem vollen Rechtseinschlag des lenkbaren Radträgers (20), und eine Mehrzahl von Lenkern (31, 32, 33, 34, 35) für die Anlenkung des Radträgers (20) an die Karosserie (200) des Fahrzeugs, weiter aufweisend eine Dämpfervorrichtung (40) für die Dämpfung einer Bewegung des Radträgers (20) relativ zur Karosserie (200), wobei die Dämpfervorrichtung (40) über eine Radträgerverbindung (42) mit dem Radträger (20) verbunden ist,
wobei die Radträgerverbindung (42) in einem Anbindungsbereich (50) der Oberflächenabschnitte des durch den Schwenkbereich des Radträgers (20) definierten Radraumes (110) des Rades (100) angeordnet ist, welcher von allen zur Karosserie (200) gewandten Bereichen des Radraumes (110) den größten direkten Abstand von der Karosserie (200) aufweist, wobei der durch den Schwenkbereich des Radträgers (20) definierte Radraum (110) des Rades (100) symmetrisch zu einer Symmetrieebene ausgebildet ist, wobei die Radträgerverbindung (42) der Dämpfervorrichtung (40) in dieser Symmetrieebene angeordnet ist, und **dadurch gekennzeichnet, dass** separat von der Dämpfervorrichtung (40) mit Bezug auf den Radträger (20) auf der gegenüberliegenden Seite der Dämpfervorrichtung (40) eine Federvorrichtung (60) für die Federung der Bewegung des Radträgers (20) relativ zur Karosserie (200) angeordnet ist.

2. Radaufhängung (10) nach Anspruch 1, **dadurch gekennzeichnet, dass** einer der Lenker (31) eine topfartige Aufnahme (31a) aufweist, in welchem die Federvorrichtung (60) abgestützt ist.

3. Radaufhängung (10) nach Anspruch 1, **dadurch gekennzeichnet, dass** die Dämpfervorrichtung (40) in oder an demselben Lenker (31) abgestützt ist, wie die Federvorrichtung (60).

4. Radaufhängung (10) nach einem der vorangegangenen Ansprüche, **dadurch gekennzeichnet, dass** wenigstens einer der Lenker (32) einen gekrümmten Abschnitt (32a) aufweist, welcher durch die Krümmung einen Bauraum für die Dämpfervorrichtung (40) schafft und/oder vergrößert.

5. Radaufhängung (10) nach einem der vorangegangenen Ansprüche, **dadurch gekennzeichnet, dass** die Radträgerverbindung (42) derart angeordnet ist, dass das Verhältnis zwischen dem Hub des Radträgers (20) bei der Relativbewegung des Rades (100) zur Karosserie (200) und dem dabei entstehenden Hub der Dämpfer Vorrichtung (40) größer als 0,5:1 beträgt.

6. Radaufhängung (10) nach einem der vorangegangenen Ansprüche, **dadurch gekennzeichnet, dass** eine Antriebswelle (36) für den Antrieb des Radträgers (20) vorgesehen ist.

7. Radaufhängung (10) nach einem der vorangegangenen Ansprüche, **dadurch gekennzeichnet, dass** die Dämpfervorrichtung (40) eine Dämpfung entlang einer Dämpferachse (A) ermöglicht, wobei die Dämpferachse (A) von der Vertikalen des Fahrzeugs und mit Bezug auf die Fahrtrichtung (F) des Fahrzeugs nach hinten und/oder zu der Karosserie (200) hin geneigt ist.

8. Radaufhängung (10) nach einem der vorangegangenen Ansprüche, **dadurch gekennzeichnet, dass** der lenkbare Radträger (20) ausgebildet ist für einen symmetrischen Schwenkbereich mit Bezug auf die Schwenkachse.

9. Hinterachse eines Fahrzeugs, aufweisend eine linke und eine rechte Radaufhängung (10), wobei beide Radaufhängungen (10) ausgebildet sind mit den Merkmalen eines der Ansprüche 1 bis 8.

10. Verfahren für die Positionierung der Radträgerverbindung (42) einer Dämpfervorrichtung (40) für die Verbindung mit einem in einem Schwenkbereich lenkbaren Radträger (20) einer Radaufhängung (10) für die Befestigung eines Rades (100), aufweisend die folgenden Schritte:
- Bestimmen des durch den Schwenkbereich des Radträgers (20) definierten Radraumes (110) des Rades (100),
- Bestimmen eines Anbindungsbereichs (50) der Oberflächenabschnitte des Radraumes (110), welcher von allen zur Karosserie (200) gewandten Bereichen des Radraumes (110) den größten direkten Abstand von der Karosserie (200) aufweist und
- Positionieren der Radträgerverbindung (42) im Anbindungsbereich (50),
wobei das Verfahren für eine Radaufhängung (10) mit den Merkmalen eines der Ansprüche 1 bis 8 eingesetzt.

## Claims

1. Wheel suspension (10) for the rear axle of a vehicle, comprising a hub carrier (20) that is steerable in a pivoting range for mounting a wheel (100), the pivoting range extending from a hard left steering angle of the steerable hub carrier (20) to a hard right steering angle of the steerable hub carrier (20), and a plurality of suspension links (31, 32, 33, 34, 35) for articulation of the hub carrier (20) to the vehicle body (200) of the vehicle, further comprising a damping device (40) for damping a movement of the hub carrier (20) relative to the vehicle body (200), wherein the damping device (40) is connected to the hub carrier (20) by means of a hub carrier connection (42),
wherein the hub carrier connection (42) is arranged in a connection area (50) of the surface sections of the wheel space (110) of the wheel (100) defined by the pivoting range of the hub carrier (20), which, of all areas of the wheel space (110) facing the vehicle body (200), has the greatest direct distance from the vehicle body (200),
wherein the wheel space (110) of the wheel (100) defined by the pivoting range of the hub carrier (20) is configured symmetrically to a plane of symmetry, wherein the hub carrier connection (42) of the damping device (40) is arranged in this plane of symmetry,
and **characterised in that**, separately from the damping device (40) in relation to the hub carrier (20), a spring device (60) for springing the movement of the hub carrier (20) relative to the vehicle body (200) is arranged on the opposite side of the damping device (40).

2. Wheel suspension (10) according to claim 1, **characterised in that** one of the suspension links (31) has a cup-shaped recess (31a), in which the spring device (60) is supported.

3. Wheel suspension (10) according to claim 1, **characterised in that** the damping device (40) is supported in or on the same suspension link (31) as the spring device (60).

4. Wheel suspension (10) according to any of the preceding claims, **characterised in that** at least one of the suspension links (32) has a curved section (32a), which creates and/or enlarges an installation space for the damping device (40) due to its curvature.

5. Wheel suspension (10) according to any of the preceding claims, **characterised in that** the hub carrier connection (42) is arranged such that the ratio between the travel of the hub carrier (20) during the relative movement of the wheel (100) to the vehicle body (200) and the resulting travel of the damping device (40) is greater than 0.5:1.

6. Wheel suspension (10) according to any of the preceding claims, **characterised in that** a drive shaft (36) is provided for driving the hub carrier (20).

7. Wheel suspension (10) according to any of the preceding claims, **characterised in that** the damping device (40) facilitates damping along a damping axis (A), wherein the damping axis (A) is inclined backwards and/or towards the vehicle body (200) from the vertical plane of the vehicle and in relation to the direction of travel (F) of the vehicle.

8. Wheel suspension (10) according to any of the preceding claims, **characterised in that** the steerable hub carrier (20) is configured for a symmetrical pivoting range in relation to the pivot axis.

9. Rear axle of a vehicle having a left and a right wheel suspension (10), wherein both wheel suspensions (10) are configured with the characteristics of one of the claims 1 to 8.

10. Method for positioning the hub carrier connection (42) of a damping device (40) for connection with a hub carrier (20) of a wheel suspension (10) that is steerable in a pivoting range for mounting a wheel (100), comprising the following steps:
- Determining the wheel space (110) of the wheel (100) defined by the pivoting range of the hub carrier (20),
- Determining a connection area (50) of the surface sections of the wheel space (110), which, of all areas of the wheel space (110) facing the vehicle body (200), has the greatest direct distance from the vehicle body (200) and
- Positioning the hub carrier connection (42) in the connection area (50),
wherein the method for a wheel suspension (10) is implemented with the characteristics of one of the claims 1 to 8.

## Revendications

1. Suspension de roue (10) pour l'essieu arrière d'un véhicule automobile, présentant un support de roue orientable (20) dans une zone de pivotement pour la fixation d'une roue (100), la zone de pivotement s'étendant d'un tour complet à gauche du support de roue orientable (20) à un tour complet à droite du support de roue orientable (20), et une pluralité de bras (31, 32, 33, 34, 35) pour l'articulation du support de roue (20) sur la carrosserie (200) du véhicule automobile, présentant en outre un dispositif d'amortissement (40) pour l'amortissement d'un mouvement du support de roue (20) par rapport à la carrosserie (200), dans laquelle le dispositif d'amortissement (40) est connecté au support de roue (20) par l'intermédiaire d'une connexion de support de roue (42),
dans laquelle la connexion de support de roue (42) est disposée dans une zone de liaison (50) des sections de surfaces de l'espace de roue (110) de la roue (100) défini par la zone de pivotement du support de roue (20), laquelle présente la plus grande distance directe de la carrosserie (200) de toutes les zones de l'espace de roue (110) orientées vers la carrosserie (200), dans laquelle l'espace de roue (110) de la roue (100) défini par la zone de pivotement du support de roue (20) est conçu symétriquement par rapport à un plan de symétrie, dans laquelle la connexion de support de roue (42) du dispositif d'amortissement (40) est disposée dans ce plan de symétrie, et **caractérisée en ce qu'**un dispositif à ressort (60) est disposé pour amortir le mouvement du support de roue (20) par rapport au corps (200) séparément du dispositif d'amortissement (40) par rapport au support de roue (20) sur le côté opposé du dispositif d'amortissement (40).

2. Suspension de roue (10) selon la revendication 1, **caractérisée en ce que** l'un des bras (31) présente un logement en forme de pot (31a), dans laquelle le dispositif à ressort (60) est supporté.

3. Suspension de roue (10) selon la revendication 1, **caractérisée en ce que** le dispositif d'amortissement (40) est supporté dans ou sur le même bras (31) que le dispositif à ressort (60).

4. Suspension de roue (10) selon l'une quelconque des revendications précédentes, **caractérisée en ce qu'**au moins un des bras (32) présente une section courbe (32a) qui, en raison de la courbure, crée et/ou augmente un espace d'installation pour le dispositif d'amortissement (40).

5. Suspension de roue (10) selon l'une quelconque des revendications précédentes, **caractérisée en ce que** la connexion de support de roue (42) est disposée de sorte que le rapport entre la course du support de roue (20) pendant le mouvement relatif de la roue (100) par rapport à la carrosserie (200) et la course résultante du dispositif d'amortissement (40) est supérieur à 0,5:1.

6. Suspension de roue (10) selon l'une quelconque des revendications précédentes, **caractérisée en ce qu'**un arbre d'entraînement (36) est prévu pour entraîner le support de roue (20).

7. Suspension de roue (10) selon l'une quelconque des revendications précédentes, **caractérisée en ce que** le dispositif d'amortissement (40) permet un amortissement le long d'un axe d'amortissement (A), dans laquelle l'axe d'amortissement (A) est incliné vers l'arrière et/ou vers la carrosserie (200) par rapport à la verticale du véhicule automobile et par rapport au sens de la marche (F) du véhicule automobile.

8. Suspension de roue (10) selon l'une quelconque des revendications précédentes, **caractérisée en ce que** le support de roue orientable (20) est conçu pour une zone de pivotement symétrique par rapport à l'axe de pivotement.

9. Essieu arrière d'un véhicule automobile, présentant une suspension de roue gauche et une suspension de roue droite (10), dans lequel les deux suspensions de roue (10) sont conçues avec les caractéristiques de l'une quelconque des revendications 1 à 8.

10. Procédé de positionnement de la connexion de support de roue (42) d'un dispositif d'amortissement (40) pour la connexion à un support de roue orientable (20) dans une zone de pivotement d'une suspension de roue (10) pour la fixation d'une roue (100), présentant les étapes suivantes :
- détermination de l'espace de roue (110) de la roue (100) défini par la zone de pivotement du support de roue (20),
- détermination d'une zone de liaison (50) des sections de surfaces de l'espace de roue (110), qui présente la plus grande distance directe de la carrosserie (200) de toutes les zones de l'espace de roue (110) orientées vers la carrosserie (200) et
- positionnement de la connexion du support de roue (42) dans la zone de liaison (50),
dans lequel le procédé est utilisé pour une suspension de roue (10) avec les caractéristiques de l'une quelconque des revendications 1 à 8.
